# FASCICULE DE BREVET EUROPEEN

(11) **EP 3 572 209 B1**
(45) Date de publication et mention de la délivrance du brevet: **29.12.2021**
(21) Numéro de dépôt: 18174167.9
(22) Date de dépôt: 24.05.2018
(51) Int. Cl.: G04B 37/22, G04B 19/12, G04B 29/02, B22F 3/11, B33Y 10/00, B33Y 80/00, G04G 17/08, C22C 32/00, A44C 27/00

(54) **COMPOSANT D'HABILLAGE EN MATÉRIAU COMPOSITE ET SON PROCÉDÉ DE FABRICATION**
VERKLEIDUNGSKOMPONENTE AUS VERBUNDMATERIAL, UND IHR HERSTELLUNGSVERFAHREN
WATCH OR JEWELERY COMPONENT MADE OF COMPOSITE MATERIAL AND METHOD FOR MANUFACTURING SAME

(43) Date de publication de la demande: 27.11.2019
(73) Titulaire: The Swatch Group Research and Development Ltd, 2074 Marin (CH)
(72) Inventeur: Kaltenrieder, Cédric, 2608 Courtelary (CH); Vuilleumier, Gilles, 2504 Bienne (CH)
(74) Mandataire: ICB SA

(56) Documents cités:
- EP-A1- 2 316 299
- EP-A2- 2 485 099
- CH-A2- 712 488
- JP-A- 2008 020 265

## Description

### DOMAINE TECHNIQUE

La présente invention se rapporte à un procédé de fabrication d'un composant d'habillage pour l'horlogerie ou la bijouterie en matériau composite. Elle se rapporte plus particulièrement à un procédé de fabrication faisant intervenir une étape d'impression 3D du renfort du matériau composite. La présente invention se rapporte également au composant d'habillage en horlogerie ou en bijouterie réalisé avec le matériau composite.

### ART ANTERIEUR

Dans un souci d'allègement, les alliages métalliques peuvent être remplacés par des matières plastiques. Pour améliorer les propriétés de ces dernières, on utilise des renforts sous forme de particules, de fibres ou encore d'une structure. On connaît, par exemple, dans le domaine horloger, la montre Swatch Skin qui comporte au sein de sa carrure une structure métallique. Ce renfort est réalisé par étampage, ce qui présente plusieurs désavantages. La mise à forme du renfort nécessite un outillage coûteux, avec un nombre d'opérations de découpage, emboutissage, pliage et écrouissage croissant avec la complexité de la géométrie à réaliser. En outre, les géométries réalisables par étampage sont limitées. Pour alléger la montre tout en maintenant la fonction de renfort de la structure, des géométries plus complexes, par exemple en forme de nid d'abeilles, peuvent être souhaitées.

Par exemple JP 2008 020265 A décrit une telle structure en nid d'abeille.

On connaît aussi EP 2 316 299 A1 qui divulgue une pièce comportant une structure en métal munie d'un décor en relief et d'une couche d'élastomère entourant le relief.

### RESUME DE L'INVENTION

La présente invention a ainsi pour objet de proposer un procédé de fabrication d'un composant d'habillage en horlogerie ou en bijouterie comportant un renfort présentant une géométrie choisie librement en fonction de considérations techniques et/ou esthétiques.

A cet effet, le renfort est réalisé par fabrication additive. Cela permet de fabriquer un renfort présentant une structure optimisée en fonction de critères de poids, de résistance et éventuellement de critères esthétiques.

Le renfort ainsi obtenu est ensuite noyé en tout ou partie au sein d'une matière synthétique pour donner la forme finale souhaitée au composant.

D'autres caractéristiques et avantages de la présente invention apparaîtront dans la description suivante de modes de réalisation préférés, présentés à titre d'exemple non limitatif en référence aux dessins annexés.

### BREVE DESCRIPTION DE LA FIGURE

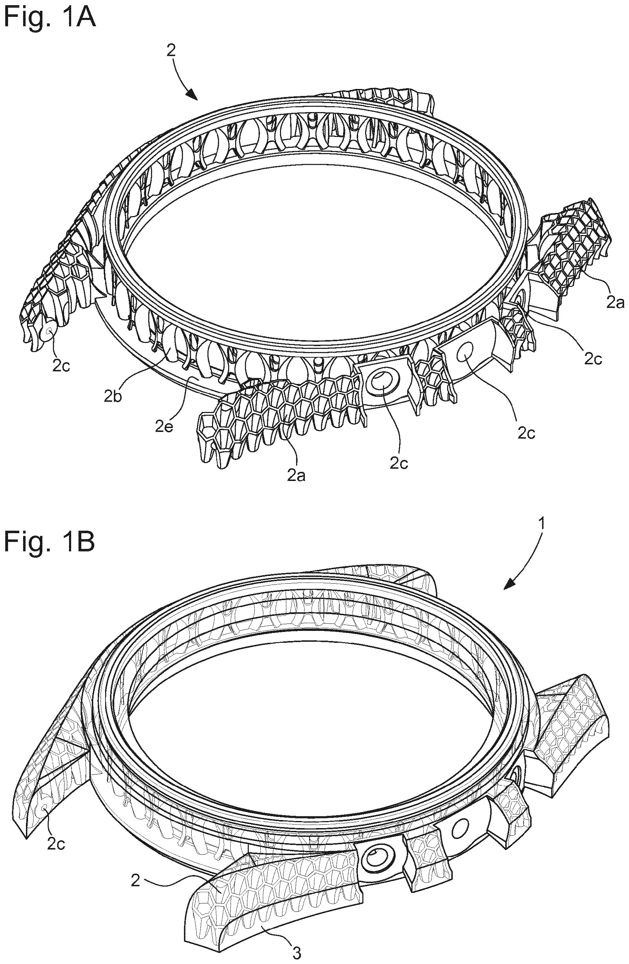

La figure 1A représente une vue tridimensionnelle d'un renfort pour carrure réalisé par fabrication additive avec un procédé qui ne fait pas partie de l'invention. La figure 1B représente ce même renfort surmoulé avec une matière synthétique selon le procédé de l'invention.

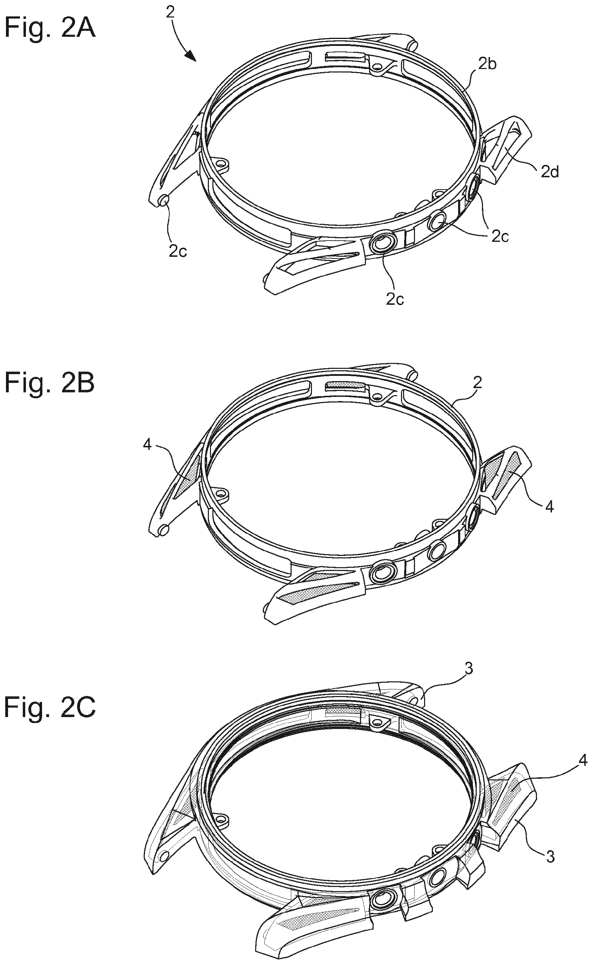

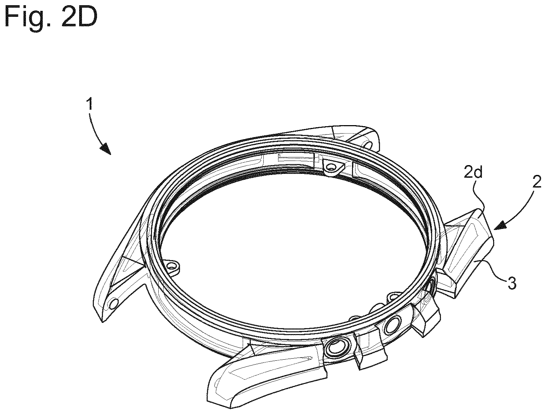

La figure 2A représente l'invention, qui consiste en une variante du renfort de la figure 1A avec, à la figure 2B, une étape additionnelle de montage de noyaux solubles ou fusibles au sein du renfort lors du procédé de fabrication. La figure 2C représente de manière similaire à la figure 1B, l'étape de surmoulage du renfort muni des noyaux. La figure 2D représente le renfort surmoulé après dissolution ou fusion des noyaux.

### DESCRIPTION DETAILLEE

La présente invention se rapporte à un procédé de fabrication d'un composant d'habillage en horlogerie ou en bijouterie réalisé avec un matériau composite comportant une matrice organique, qu'on qualifiera de manière plus générale de matrice synthétique, et un renfort. Le composant d'habillage peut être une boîte de montre, une carrure, un fond, une lunette, un bracelet, un maillon de bracelet, un cadran, une aiguille, un poussoir, etc. A titre d'exemple, il s'agit dans la figure 2D d'une carrure 1. Le renfort, référencé 2, a pour objet de renforcer la matrice et/ou d'apporter un effet esthétique particulier au composant si la matrice est transparente. Ce renfort monobloc peut présenter une variété quasi-illimitée de géométries. Il a pour caractéristique de former une structure ajourée afin d'alléger le composant. Comme représentée à la figure 1A, le renfort 2 peut comporter en tout ou partie une structure en nid d'abeilles. Dans l'exemple illustré, la structure en nid d'abeilles est disposée au niveau des parties 2a destinées à former les cornes de la boîte de montre. Il peut également être formé d'une ou plusieurs parois ajourées 2b comme représenté aux figures 1A et 2A. Il peut aussi comporter une base 2e surmontée par la paroi ajourée 2b pour la variante de la figure 1A. Il peut en outre comporter des zones fonctionnelles 2c: orifices, pivots, rainures, évidements, etc. permettant le montage ultérieur sur le composant d'éléments rapportés tels que des attaches bracelet, des tubes de poussoir ou de couronne, la glace, la lunette et le fond. Le renfort peut être réalisé dans un alliage métallique et avantageusement dans un alliage de titane ou un alliage d'aluminium choisis pour leur faible densité. Le renfort peut également être réalisé dans des matériaux céramiques (alumine, zircone, etc.) ou encore organiques. Dans ce dernier cas, le matériau organique du renfort présente des propriétés mécaniques supérieures à celles de la matrice et est avantageusement choisi parmi les polymères suivants : PEEK (Polyétheréthercétone), ABS (Acrylonitrile Butadiène Styrène), PEI (Polyétherimide), PA (Polyamide), ces polymères pouvant être chargés avec du carbone par exemple un polyamide chargé de carbone tel que celui vendu sous la dénomination commerciale Windform XT 2.0 par la société Windform , de la silice, de l'aluminium, par exemple un polyamide chargé de poudre d'aluminium tel que celui vendu sous la dénomination commerciale Alumide par la société Materialise. etc.

Le renfort 2 est noyé en tout ou partie dans une matière synthétique 3 formant la matrice du matériau composite (fig.1B et fig.2D). La matière synthétique peut, par exemple, être un élastomère fluoré (FKM, FFKM), un élastomère polyuréthane (PUR), un silicone, un élastomère thermoplastique (TPE) ou encore un thermodurcissable tel qu'un époxyde. A titre d'exemple, le matériau composite peut comporter une matrice en résine époxyde enrobant un renfort réalisé dans un alliage d'aluminium. La matière synthétique peut être transparente, ce qui permet de visualiser le renfort au sein du composant.

Selon une variante et afin de procurer un effet esthétique particulier, la matière de la matrice est mélangée à un pigment phosphorescent de type oxyde d'alcalino-terreux dopé avec des terres rares. Par exemple, le pigment phosphorescent peut être de l'aluminate de strontium, du silicate de strontium, du silicate de baryum ou du silicate de calcium dopé avec de l'europium et du dysprosium.

Le procédé de fabrication du matériau composite selon l'invention comporte trois étapes consistant à (fig.1A et fig.1 B):
a) Réaliser un fichier 3D de la structure du renfort, par exemple en utilisant un programme approprié comme SolidWorks^{®}. La géométrie de la structure est choisie en fonction de considérations esthétiques et/ou techniques. On peut recourir à des outils CAD d'optimisation topologique pour définir la géométrie de cette structure afin de minimiser la quantité de matière utilisée et donc la masse de la structure. La structure peut en outre être définie de manière à éviter autant que possible le recours à des supports d'impression lors du procédé de fabrication.
b) Réaliser le renfort 2 par fabrication additive (fig.1A). De nombreux procédés peuvent être employés. De manière non exhaustive, on peut citer les procédés suivants d'impression: par projection de liant (*binder jetting*), par dépôt de matériau et fusion (*directed energy deposition*), par extrusion de matériau (*material extrusion*), par projection de matériau (*material jetting*), par fusion sur lit de poudre (*powed bed fusion*), par stratification de matériau en feuille (*sheet lamination*), par photopolymérisation en cuve (*vat photopolymerization*). La structure du renfort est construite par un empilement de couches successives jusqu'à obtenir la forme finale du renfort. L'effet de couche peut-être négligeable voire inexistant pour des technologies de fabrication additive telles que le « CLIP » (photopolymérisation en cuve) de la société Carbon Inc. Pour pour d'autres technologies comme par exemple celles des sociétés mCor et Fabrisonic utilisant la « *sheet lamination* », l'épaisseur des couches empilées est de l'ordre de 0,1 à 0,2mm.
c) Noyer le renfort 2 en tout ou partie dans la matière synthétique 3 (fig.1B). L'étape consistant à noyer le renfort peut être réalisée par surmoulage par injection, enrobage ou infiltration avec la matière synthétique destinée à former la matrice. La matière synthétique peut recouvrir et remplir l'ensemble de la structure ajourée ou alternativement recouvrir et remplir seulement partiellement le renfort. Dans ce dernier cas, le renfort est alors partiellement à nu dans le produit final.

Le procédé de fabrication peut comporter une étape optionnelle de finition (non représentée) sur le renfort avant l'étape c). Il peut s'agir d'un usinage ayant pour objet l'obtention de géométries et cotes précises sur les zones fonctionnelles servant au montage ultérieur des éléments rapportés. L'usinage peut aussi avoir un but esthétique. Cet usinage peut être réalisé lorsque le renfort est encore sur la plaque support d'impression. Il peut également s'agir de traitements de surface comme une structuration laser, une anodisation, un dépôt PVD, etc., ayant pour objet de protéger le renfort et/ou d'améliorer son esthétique. Le procédé de fabrication peut aussi comporter une étape optionnelle de finition, et plus particulièrement d'usinage après l'étape c) pour obtenir la géométrie finale souhaitée. Il est également envisageable de fabriquer le renfort sans zones fonctionnelles et d'usiner ultérieurement ces dernières sur le composant issu de l'étape c).

Selon l'invention, et comme représenté aux figures 2A à 2D, le renfort 2 comporte une ou plusieurs cavités 2d destinées à rester vides après l'étape c). A cet effet, des noyaux 4 solubles ou fusibles sont montés dans ces cavités avant l'étape c) (fig.2B-fig.2C). Il peut, par exemple, s'agir de noyaux en alcool polyvinylique solubles dans l'eau. Après l'étape c), ces noyaux 4 sont dissous ou fondus pour libérer les cavités (fig.2D).

Au final, le composant d'habillage est extrêmement léger tout en étant résistant grâce au renfort ajouré noyé dans la matrice synthétique. L'aspect esthétique du composant peut également être ajusté en jouant sur la transparence de la matrice synthétique et le design du renfort.

## Revendications

1. Procédé de fabrication d'un composant d'habillage en horlogerie ou en bijouterie réalisé dans un matériau composite comprenant un renfort (2) formé d'une structure et une matrice composée d'une matière synthétique (3), ledit procédé comprenant les étapes successives consistant à :
a) Réaliser un fichier 3D du renfort (2),
b) Construire ledit renfort (2) par fabrication additive sur base du fichier 3D,
c) Noyer en tout ou partie ledit renfort (2) au sein de la matière synthétique (3) **caractérisé en ce qu'**il comporte en outre : avant l'étape c), une étape d'insertion d'un ou plusieurs noyaux (4) fusibles ou solubles dans respectivement une ou plusieurs cavités (2d) du renfort (2) destinée(s) à rester vide(s) après l'étape c), et après l'étape c), une étape de solubilisation ou fusion du ou des noyaux (4).

2. Procédé selon la revendication 1, **caractérisée en ce que** la structure du renfort est ajourée

3. Procédé selon l'une des revendications 1 ou 2, **caractérisé en ce qu'**il comporte une étape de finition du renfort (2) entre les étapes b) et c), l'étape de finition consistant en une étape d'usinage et/ou une étape de traitement de surface du renfort (2).

4. Procédé selon la revendication 3, **caractérisé en ce que** l'étape de traitement de surface consiste à structurer la surface du renfort (2) et/ou à déposer un revêtement sur la surface du support (2).

5. Procédé selon l'une quelconque des revendications précédentes, **caractérisé en ce qu'**il comporte une étape de finition après l'étape c), l'étape de finition consistant en une étape d'usinage pour conférer au composant sa géométrie finale.

6. Procédé selon l'une quelconque des revendications précédentes, **caractérisé en ce que** l'étape c) est réalisée par surmoulage, enrobage ou infiltration.

7. Procédé selon l'une quelconque des revendications précédentes, **caractérisé en ce que** le renfort (2) issu de l'étape b) comporte une ou plusieurs parties (2a) en nid d'abeilles et/ou une ou plusieurs parois avec des ajours (2b) et/ou une ou plusieurs zones fonctionnelles (2c) permettant le montage d'éléments sur le composant.

8. Composant d'habillage en horlogerie ou en bijouterie réalisé dans un matériau composite comportant une matrice composée d'une matière synthétique (3) et un renfort (2) présentant une structure ajourée obtenue par fabrication additive, **caractérisé en ce que** la structure ajourée comprend au moins une ouverture traversante dans laquelle s'étend la matière synthétique.

9. Composant selon la revendication 8, **caractérisé en ce que** la structure ajourée comporte une ou plusieurs parties (2a) en nid d'abeilles et/ou une ou plusieurs parois avec des ajours (2b).

10. Composant selon la revendication 8 ou 9, **caractérisé en ce que** le renfort (2) comporte des zones fonctionnelles (2c) telles que des orifices, rainures, évidements, pivots, permettant le montage ultérieur d'éléments sur le composant.

11. Composant selon l'une quelconque des revendications 8 à 10, **caractérisé en ce que** le renfort (2) est réalisé dans une matière céramique, métallique ou organique.

12. Composant selon l'une quelconque des revendications 8 à 11, **caractérisé en ce que** le renfort (2) est réalisé dans un alliage de titane ou un alliage d'aluminium.

13. Composant selon l'une quelconque des revendications 8 à 11, **caractérisé en ce que** le renfort (2) est réalisé dans un polymère choisi parmi la liste comprenant le PEEK, l'ABS, le PEI et le PA.

14. Composant selon l'une quelconque des revendications 8 à 13, **caractérisé en ce que** la matrice synthétique (3) est réalisée dans une résine choisie parmi la liste comprenant un élastomère fluoré (FKM, FFKM), un élastomère polyuréthane (PUR), un silicone, un élastomère thermoplastique (TPE) ou encore une résine thermodurcissable tel qu'un époxyde.

15. Composant selon l'une quelconque des revendications 8 à 14, **caractérisé en ce que** la matrice synthétique (3) est réalisée dans une résine époxyde.

16. Composant selon l'une quelconque des revendications 8 à 15, **caractérisé en ce que** la matière synthétique (3) est transparente.

17. Composant selon l'une quelconque des revendications 8 à 16, **caractérisé en ce qu'**il est choisi parmi la liste comprenant une boîte de montre, une carrure (1), un fond, une lunette, un bracelet, un maillon de bracelet, un cadran, un poussoir et une aiguille.

18. Composant selon la revendication 17, **caractérisé en ce qu'**il s'agit d'une carrure (1) avec le renfort (2) comprenant plusieurs parties (2a) en nid d'abeilles disposées au niveau des cornes de la carrure (1).

## Patentansprüche

1. Herstellungsverfahren einer Verkleidungskomponente der Uhren- und Schmuckindustrie, hergestellt aus einem Verbundmaterial, umfassend eine Verstärkung (2), die geformt ist aus einer Struktur und einer Matrize aus einem Kunststoff (3), wobei das Verfahren die aufeinanderfolgenden Schritte umfasst, die aus Folgendem bestehen:
a) Erstellen einer 3D-Datei der Verstärkung (2),
b) Fertigen der Verstärkung (2) durch additive Fertigung auf Basis der 3D-Datei,
c) Einbetten der Verstärkung (2), vollständig oder teilweise, in den Kunststoff (3), **dadurch gekennzeichnet, dass** er außerdem aufweist: vor dem Schritt c), einen Schritt des Einfügens eines oder mehrerer Schmelz- oder Lösekerne (4) in jeweils einen oder mehrere Hohlräume (2d) der Verstärkung (2), der (die) nach dem Schritt c) leer bleiben soll(en), und nach dem Schritt c), einen Schritt der Solubilisierung oder der Fusion des Kerns oder der Kerne (4).

2. Verfahren nach Anspruch 1, **dadurch gekennzeichnet, dass** die Struktur der Verstärkung durchbrochen ist.

3. Verfahren nach einem der Ansprüche 1 oder 2, **dadurch gekennzeichnet, dass** es zwischen den Schritten b) und c) einen Endbearbeitungsschritt der Verstärkung (2) aufweist, wobei der Endbearbeitungsschritt aus einem Bearbeitungsschritt und/oder einem Oberflächenbehandlungsschritt der Verstärkung (2) besteht.

4. Verfahren nach Anspruch 3, **dadurch gekennzeichnet, dass** der Oberflächenbehandlungsschritt darin besteht, die Oberfläche der Verstärkung (2) zu strukturieren und/oder einen Überzug auf der Oberfläche der Verstärkung (2) aufzutragen.

5. Verfahren nach einem der vorhergehenden Ansprüche, **dadurch gekennzeichnet, dass** es nach dem Schritt c) einen Endbearbeitungsschritt aufweist, wobei der Endbearbeitungsschritt aus einem Bearbeitungsschritt besteht, um der Komponente seine endgültige Geometrie zu verleihen.

6. Verfahren nach einem der vorhergehenden Ansprüche, **dadurch gekennzeichnet, dass** der Schritt c) durch Umspritzen, Vergießen oder Infiltration realisiert wird.

7. Verfahren nach einem der vorhergehenden Ansprüche, **dadurch gekennzeichnet, dass** die Verstärkung (2), die aus dem Schritt b) hervorgegangen ist, ein oder mehrere Teile (2a) in Wabenform aufweist und/oder eine oder mehrere Wände mit Durchbrüchen (2b) und/oder einen oder mehrere funktionelle Bereiche (2c), die die Montage von Elementen an der Komponente ermöglichen.

8. Verkleidungskomponente der Uhren- oder Schmuckindustrie, hergestellt aus einem Verbundmaterial, umfassend eine Matrize aus einem Kunststoff (3) und eine Verstärkung (2), mit einer durch additive Fertigung erhaltenen durchbrochenen Struktur, **dadurch gekennzeichnet, dass** die durchbrochene Struktur mindestens eine durchgehende Öffnung umfasst, in die sich der Kunststoff erstreckt.

9. Komponente nach Anspruch 8, **dadurch gekennzeichnet, dass** die durchbrochene Struktur ein oder mehrere Teile (2a) in Wabenform aufweist und/oder eine oder mehrere Wände mit Durchbrüchen (2b).

10. Komponente nach Anspruch 8 oder 9, **dadurch gekennzeichnet, dass** die Verstärkung (2) funktionelle Bereiche (2c) wie Bohrungen, Nuten, Aushöhlungen und Zapfen aufweist, die die nachträgliche Montage von Elementen an der Komponente ermöglichen.

11. Komponente nach einem der Ansprüche 8 bis 10, **dadurch gekennzeichnet, dass** die Verstärkung (2) aus einem keramischen, metallischen oder organischen Material hergestellt ist.

12. Komponente nach einem der Ansprüche 8 bis 11, **dadurch gekennzeichnet, dass** die Verstärkung (2) aus einer Titanlegierung oder einer Aluminiumlegierung hergestellt ist.

13. Komponente nach einem der Ansprüche 8 bis 11, **dadurch gekennzeichnet, dass** die Verstärkung (2) aus einem Polymer hergestellt ist, das aus der Liste ausgewählt wurde, die PEEK, ABS, PEI und PA umfasst.

14. Komponente nach einem der Ansprüche 8 bis 13, **dadurch gekennzeichnet, dass** die Kunststoffmatrize (3) aus einem Harz hergestellt ist, das aus der Liste ausgewählt wurde, die ein Fluorelastomer (FKM, FFKM), ein Polyurethan (PUR), ein Silikon, ein thermoplastisches Elastomer (TPE) oder auch ein duroplastisches Harz wie Epoxid umfasst.

15. Komponente nach einem der Ansprüche 8 bis 14, **dadurch gekennzeichnet, dass** die Kunststoffmatrize (3) aus einem Epoxidharz hergestellt ist.

16. Komponente nach einem der Ansprüche 8 bis 15, **dadurch gekennzeichnet, dass** der Kunststoff (3) transparent ist.

17. Komponente nach einem der Ansprüche 8 bis 16, **dadurch gekennzeichnet, dass** sie aus der Liste ausgewählt wurde, die ein Uhrengehäuse, einen Mittelteil (1), einen Boden, eine Lünette, ein Armband, ein Armbandglied, ein Zifferblatt, einen Drücker und einen Zeiger umfasst.

18. Komponente nach Anspruch 17, **dadurch gekennzeichnet, dass** es sich um einen Mittelteil (1) mit der Verstärkung (2) handelt, umfassend mehrere Teile (2a) in Wabenform, die im Bereich der Hörner des Mittelteils (1) angeordnet sind.

## Claims

1. Method for manufacturing an external component for horology or jewellery made of a composite material comprising a reinforcement (2) formed of a structure and a matrix composed of a synthetic material (3), said method comprising the successive steps consisting of:
a) Making a 3D file of the reinforcement (2),
b) Constructing said reinforcement (2) by additive manufacturing on the basis of the 3D file,
c) Embedding all or part of said reinforcement (2) in the synthetic material (3) **characterised in that** it further includes: before step c), a step of inserting one or more fusible or soluble cores (4) respectively in one or more cavities (2d) of the reinforcement (2) intended to remain empty after step c), and after step c), a step of dissolving or melting the core or cores (4).

2. Method according to claim 1, **characterised in that** the structure of the reinforcement is perforated

3. Method according to one of claims 1 or 2, **characterised in that** it includes a step of finishing the reinforcement (2) between steps b) and c), the finishing step consisting of a machining step and/or a surface treatment step of the reinforcement (2).

4. Method according to claim 3, **characterised in that** the surface treatment step consists in structuring the surface of the reinforcement (2) and/or in depositing a coating on the surface of the support (2).

5. Method according to any one of the preceding claims, **characterised in that** it includes a finishing step after step c), the finishing step consisting in a machining step to give the component its final geometry.

6. Method according to any one of the preceding claims, **characterised in that** step c) is performed by overmoulding, coating or infiltration.

7. Method according to any one of the preceding claims, **characterised in that** the reinforcement (2) from step b) includes one or more honeycomb-shaped portions (2a) and/or one or more walls with perforations (2b) and/or one or more functional areas (2c) for mounting elements on the component.

8. External component for horology or jewellery made of a composite material including a matrix composed of a synthetic material (3) and a reinforcement (2) having a perforated structure obtained by additive manufacturing, **characterised in that** the perforated structure comprises at least one through opening wherein extends the synthetic material.

9. Component according to claim 8, **characterised in that** the perforated structure includes one or more honeycomb-shaped portions (2a) and/or one or more walls with perforations (2b).

10. Component according to claim 8 or 9, **characterised in that** the reinforcement (2) includes functional areas (2c) such as orifices, grooves, recesses, pivots, for the subsequent mounting of elements on the component.

11. Component according to any one of claims 8 to 10, **characterised in that** the reinforcement (2) is made of a ceramic, metal or organic material.

12. Component according to any one of claims 8 to 11, **characterised in that** the reinforcement (2) is made of a titanium alloy or an aluminium alloy.

13. Component according to any one of claims 8 to 11, **characterised in that** the reinforcement (2) is made of a polymer chosen from the list comprising PEEK, ABS, PEI and PA.

14. Component according to any one of claims 8 to 13, **characterised in that** the synthetic matrix (3) is made of a resin chosen from the list comprising a fluorinated elastomer (FKM, FFKM), a polyurethane elastomer (PUR), a silicone, a thermoplastic elastomer (TPE) or also a thermoset material such as an epoxide.

15. Component according to any one of claims 8 to 14, **characterised in that** the synthetic matrix (3) is made of an epoxy resin.

16. Component according to any one of claims 8 to 15, **characterised in that** the synthetic material (3) is transparent.

17. Component according to any one of claims 8 to 16, **characterised in that** it is chosen from the list comprising a watch case, a middle (1), a back, a bezel, a bracelet, a bracelet link, a dial, a button and a hand.

18. Component according to claim 17, **characterised in that** it is a middle (1) with the reinforcement (2) comprising a plurality of honeycomb-shaped portions (2a) disposed at the horns of the middle (1).
